## Europäisches Patentamt

## European Patent Office

## Office européen des brevets

(19)

(11) Numéro de publication: **0 097 406 B1**

(12) # FASCICULE DE BREVET EUROPEEN

(45) Date de publication du fascicule du brevet:
**23.04.86**

(51) Int. Cl.⁴: **A 01 K 1/062**

(21) Numéro de dépôt: **83200924.5**

(22) Date de dépôt: **22.06.83**

(54) **Dispositif pour attacher un animal.**

(30) Priorité: **25.06.82 BE 2059752**

(43) Date de publication de la demande:
**04.01.84 Bulletin 84/1**

(45) Mention de la délivrance du brevet:
**23.04.86 Bulletin 86/17**

(84) Etats contractants désignés:
**AT BE CH DE FR IT LI LU NL SE**

(56) Documents cités:
**BE - A - 885 292**
**BE - A - 891 671**
**DE - A - 2 722 730**
**DE - A - 2 845 521**

(73) Titulaire: **Vandekeybus, Christiaan Adriaan Corneei, Kloosterstraat 21, B-2190 Essen (BE)**

(72) Inventeur: **Vandevelde, Noel, Route de Mettet 201, B-6838 Pavillons/Florennes (BE)**

(74) Mandataire: **De Rycker, Rudolf, Ir. et al, Vereenigde Octrooibureaux Belgie S.A. Charlottalei 48, B-2018 Antwerpen (BE)**

## Description

L'invention est relative à un dispositif pour attacher automatiquement un animal entrant dans une stalle, ce dispositif étant du type comprenant un organe de commande de la fermeture située sur le passage de l'animal de manière à être repoussé par celui-ci, ce dispositif comprenant en outre:
— un élément de suspension destiné à être suspendu par son sommet à une structure fixe,
— une pièce inférieure qui est reliée à la structure fixe,
— deux branches latérales qui se présentent entre l'élément de suspension et la pièce inférieure et qui forment conjointement avec cette dernière, un carcan, lesdites branches comportant chacune:
— une partie supérieure qui est articulé sur l'élément de suspension autour d'un axe perpendiculaire au plan du carcan,
et
— une partie inférieure qui est reliée par l'intermédiaire d'une première articulation à ladite partie supérieure et, par l'intermédiaire d'une seconde articulation, à ladite pièce inférieure reliée à la structure fixe, ces articulations permettant un déplacement aussi bien dans le plan du carcan qu'en dehors de celui-ci,
— des moyens de verrouillage qui dans une position de fermeture empêchent les parties basses des parties supérieures de pivoter vers l'extérieur des branches dans le plan de carcan,
— un organe de commande en forme d'étrier qui peut pivoter entre une première position dans laquelle il maintient les parties basses des parties supérieures des branches écartées l'une de l'autre et barre le passage entre ces parties supérieures, et une seconde position dans laquelle il laisse les parties supérieures prendre une position verticale rapprochée de fermeture,
et
— une liaison mécanique entre l'organe de commande et les moyens de verrouillage, qui dans la première position de l'organe de commande, maintient les moyens de verrouillage en position de déverrouillage et, dans la seconde position de l'organe de commande, maintient les moyens de verrouillage en position de verrouillage.

Un dispositif de ce genre est connu d'après DE-A-28 45 521.

Dans ce dispositif connu, les parties supérieures des branches de carcan s'articulent par leurs extrémités supérieures dans un élément de suspension qui est constitué par un profilé à section transversale en U; l'action de l'organe de commande sur les parties supérieures, les moyens de verrouillage et la liaison entre l'organe de commande et les moyens de verrouillage sont très compliqués.

L'invention a pour but d'offrir un dispositif du genre précité dont la conception est plus simple que celle du dispositif connu précité et dont le fonctionnement est également plus fiable.

Pour ouvrir le dispositif connu précité, on exerce une traction, par l'intermédiaire d'un arbre qui se situe entièrement au-dessus du carcan et d'un câble relié, d'une part, à cet arbre et, d'autre part, à cet organe de commande, sur l'organe de commande, vers le haut. En faisant tourner l'arbre, on peut ouvrir simultanément plusieurs carcans.

L'invention a notamment pour base la considération qu'une série de carcans peuvent être ouverts individuellement tout aussi rapidement lorsqu'on fait agir l'organe de commande d'une manière plus simple sur les parties supérieures et que pour l'ouverture on doit exercer sur l'organe de commande une force de traction vers le bas au lieu de vers le haut.

Dans le dispositif connu précité, l'organe de commande en position de fermeture dépasse nettement au-dessus du carcan, en particulier parce que l'organe de commande est articulé par rapport à l'élément de suspension autour d'un axe géométrique qui se situe à la hauteur de la partie supérieure de l'élément de suspension. Ceci empêche d'installer le dispositif dans des étables où la distance entre la poutre supérieure à laquelle doit être accroché l'élément de suspension et le plancher est trop réduite.

Un but de l'invention est aussi d'éliminer cet inconvénient et d'offrir un dispositif qui peut être installé en un endroit où la poutre supérieure est très basse au-dessus du sol.

Un but de l'invention est également d'offrir un dispositif du genre précité qui permet une large ouverture du carcan à une faible hauteur, tandis que la hauteur totale du carcan reste limité.

Encore un but de l'invention est d'offrir un dispositif du genre précité dont la pièce inférieure peut se trouver très près du sol et avoir une hauteur limitée.

Dans ce but,
— l'élément de suspension a la forme d'un U inversé et possède une base horizontale et deux bras s'étendant vers le bas,
— les parties supérieures des branches du carcan s'articulent sur l'élément de suspension autour de goupilles qui sont situées au voisinage des extrémités inférieures des bars de l'élément de suspension,
— les parties supérieures des branches se prolongent au-dessus de ces goupilles, de manière à former des leviérs du premier genre
et
— l'organe de commande et les moyens de verrouillage agissent sur les prolongements des parties supérieures qui dépassent au-dessus des goupilles.

Il convient de remarquer qu'ainsi l'espace entre les portions des parties supérieures qui sont située au-dessus des axes d'articulation laisse aussi la place pour le cou de l'animal alors que le dispositif se trouve en position de fermeture, ce qui signifie une utilisation plus rationnelle du dispositif sur toute sa hauteur.

Un dispositif pour attacher un animal dont l'élément de suspension possède une base et deux bras dirigés vers le bas, dont les parties supérieures des branches de carcan s'articulent autour de goupilles qui sont supportées au voisinage des extrémités inférieures des bras de l'élément de suspension et dont les parties supérieures font saillie au-dessus de ces goupilles jusque contre la base de l'élément de suspension, est connu en soi d'après DE-A-27 22 730, et FR-A-24 35 901.

Ces dispositifs connus n'ont cependant aucun organe de commande sur lequel agit l'animal pour faire passer le carcan de la position d'ouverture à celle de fermeture. Dans ces dispositifs connus, la fermeture est provoquée par le fait que l'animal repousse le carcan lui-même, ce qui rend nécessaire une plus grande longueur dans le sens longitudinal de la station couché-et-debout. Avec l'utilisation de ce dispositif connu aussi, la nourriture-appât, qui est placée à l'avant dans la mangeoire, doit être située plus en avant, ce qui n'est pas toujours possible, par exemple parce que la largeur de la mangeoire est trop limitée.

Dans une forme de réalisation avantageuse de l'invention, les parties supérieures se prolongent au-dessus des goupilles jusque contre la base de l'élément de suspension et cette base forme un canal dans lequel peuvent se déplacer les extrémités supérieures des parties supérieures des branches. De se fait, les parties supérieures sont guidées au sommet dans le plan du carcan, de telle sorte que tout jeu aux points d'articulation à hauteur desdites goupilles est compensé.

Dans une forme de réalisation particulière de l'invention, l'organe de commande s'articule par rapport à l'élément de suspension autour d'un axe parallèle au plan du carcan, entre une première position inférieure et une seconde position supérieure, et l'organe de commande dans la première position s'écarte en oblique vers le bas de l'élément de suspension.

Ceci facilite la fermeture du carcan par l'animal qui rencontre l'organe de commande.

Dans une autre forme de réalisation de l'invention, l'organe de commande s'articule par rapporte à un moyen de verrouillage autour d'un axe qui est perpendiculaire au plan du carcan, et ce moyen de verrouillage est constitué par une latte qui pivote par rapport à une partie supérieure, qui est dotée d'une partie en saillie qui engage l'autre partie supérieure et est reliée par un ressort à la première partie supérieure précitée pour en être écartée, et l'organe de commande rencontre une saillie de l'élément de suspension en position d'ouverture du carcan.

D'autre particularités et avantages de l'invention ressortiront de la description ci-après de dispositifs pour attacher un animal suivant l'invention; cette description est uniquement donnée comme exemple et ne limite pas l'invention; les chiffres de référence concernent les dessins annexés.

La figure 1 est une vue en élévation frontale d'un dispositif pour attacher un animal suivant l'invention, le carcan étant représenté en position fermée.

La figure 2 est une vue en élévation dorsale du dispositif de la figure 1.

La figure 3 est une vue en élévation latérale du dispositif des figures précédentes.

La figure 4 est une vue en élévation frontale du dispositif des figures précédentes, mais avec le carcan représenté en position ouverte.

La figure 5 est une vue en élévation dorsale du dispositif suivant les figures précédentes, dans la position ouverte suivant la figure 4.

La figure 6 est une vue en élévation latérale du dispositif des figures précédentes, le carcan étant représenté à la position ouverte des figures 4 et 5.

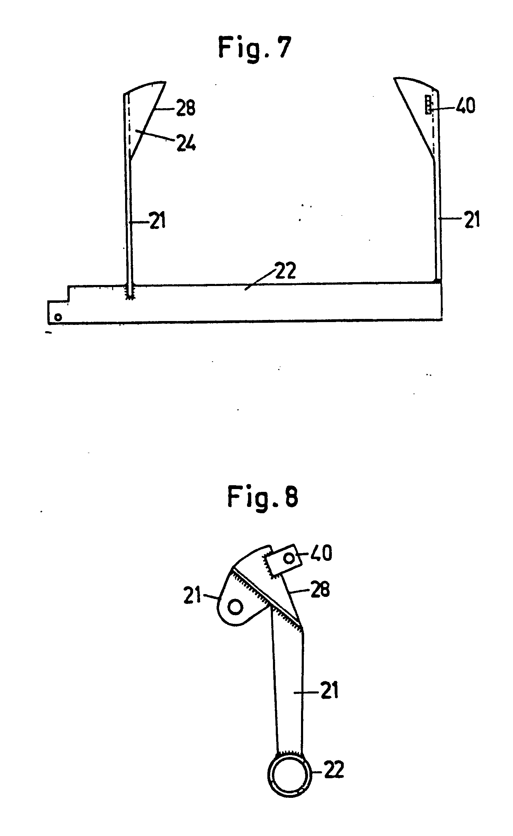

La figure 7 est une vue en élévation frontale du carcan de commande du dispositif des figures précédentes, mais a plus grande échelle.

La figure 8 est une vue en élévation latérale du carcan de commande de la figure 7.

Dans les diverses figures, les mêmes références concernent des élémentes identiques.

Le dispositif représenté aux figures pour attacher un animal, est monté dans une structure fixe à laquelle appartiennent le plancher 1 et la poutre supérieure 2.

Ce dispositif est destiné à attacher un bovin dans une station couché-et-debout. La direction transversale de cette dernière correspond à la direction de la poutre 2. Lorsque le bovin pénètre normalement dans la station couché-et-debout, il se déplace suivant la direction longitudinale.

Le dispositif est constitué essentiellement par un élément de suspension 3-4 et un carcan qui est à son tour constitué par une pièce inférieure 5 et deux branches de carcan s'y raccordant, qui sont chacune formées par une partie supérieure 6 et une partie inférieure 7. Ces parties 6 et 7 sont reliées de façon articulée entre elles ainsi qu'à l'élément de suspension 3-4 et à la pièce inférieure 5, d'une façon décrite plus en détail ci-après. Au repos, ces parties se trouvent dans un même plan, dit plan de carcan. Que le dispositif se trouve à l'état ouvert ou fermé, comme décrit ci-après, l'ensemble du dispositif en équilibre se situe avec le plan de carcan dans une direction qui correspond à la direction transversale de la station couché-et-debout.

D'un côté du dispositif s'étendant au repos suivant la direction transversale de la station couché-et-debout, dit ci-après côté frontal, cette station possède une mangeoire. L'autre côté du dispositif est donc dit côté arrière.

L'ensemble du dispositif est fait de métal.

L'élément de suspension 3-4 est en forme de U inversé et est constitué par une base 3 suspendue horizontalement et deux bras 4 dirigés vers le bas et soudés aux deux extrémités de la base. La base 3 est un canal à section transversale en U dont l'ouverture est dirigée vers le bas. Dans ce canal 3 peuvent se déplacer en va-et-vient les extrémités supérieures des parties supérieures 6.

Pour suspendre l'élément de suspension 3-4, deux petits étriers de fixation 8 sont placés autour de la poutre supérieure 2 et y sont maintenus par des boulons 9 avec des écrous. Deux oeillets 10 qui sont soudés sur la face supérieure de la base 3 sont suspendus à l'aide de chaînes 11 à des crochets qui sont fixés à leurs tour sur la face inférieure des petits étriers de fixation 8. La base 3 s'étend donc parallèlement à la poutre transversale 2.

Etant donné que les chaînes 11 sont des éléments de suspension souples, elles cherchent sous l'influence du poids de l'élément de suspension 3-4 et de tout ce qui en pend, la position dans laquelle leurs lignes d'axe sont parallèles entre elles. Au repos, ces lignes d'axe définissent un plan vertical qui s'étend parallèlement à la poutre supérieure 2, donc suivant la direction transversale de la station couché-et-debout. Il ressortira de la description qui suit que les parties supérieures 6 des branches de carcan aussi s'étendent dans un plan vertical transversale quand l'élément de suspension 3-4 se situe dans un tel plan.

Sous l'influence de l'animal, le carcan et donc les parties supérieures 6 et l'élément de suspension 3-4 peuvent être écartés du plan transversal, mais dès que la force de la pesanteur peut agir librement, le carcan reviendra dans le plan transversal.

La pièce inférieure 5 est un tube rond qui s'étend parallèlement au plancher 1. Un oeillet 12 soudé en dessous à la pièce inférieure 5, est relié par l'intermédiaire d'une chaîne 13, à un oeillet 14 qui est encastré dans le plancher 1 de la structure fixe.

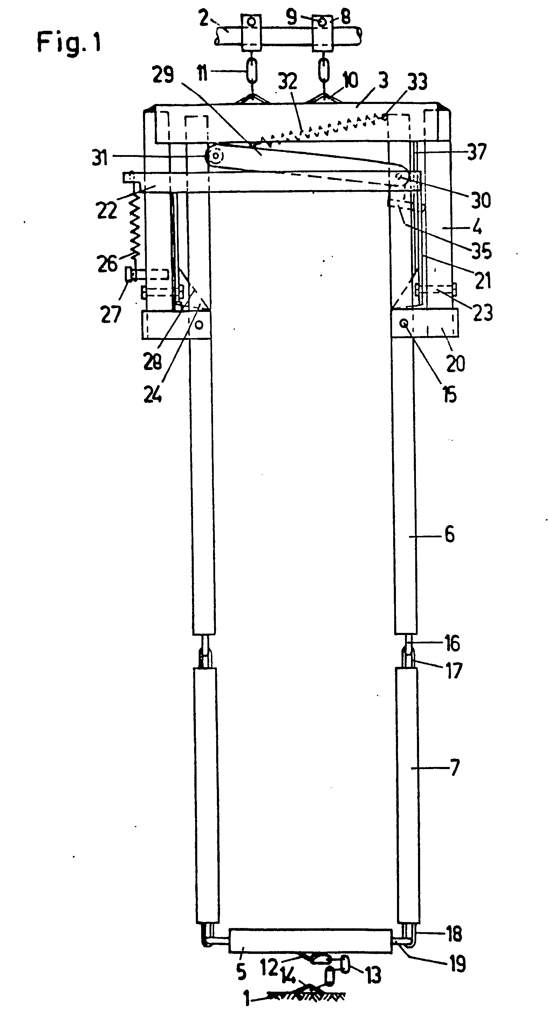

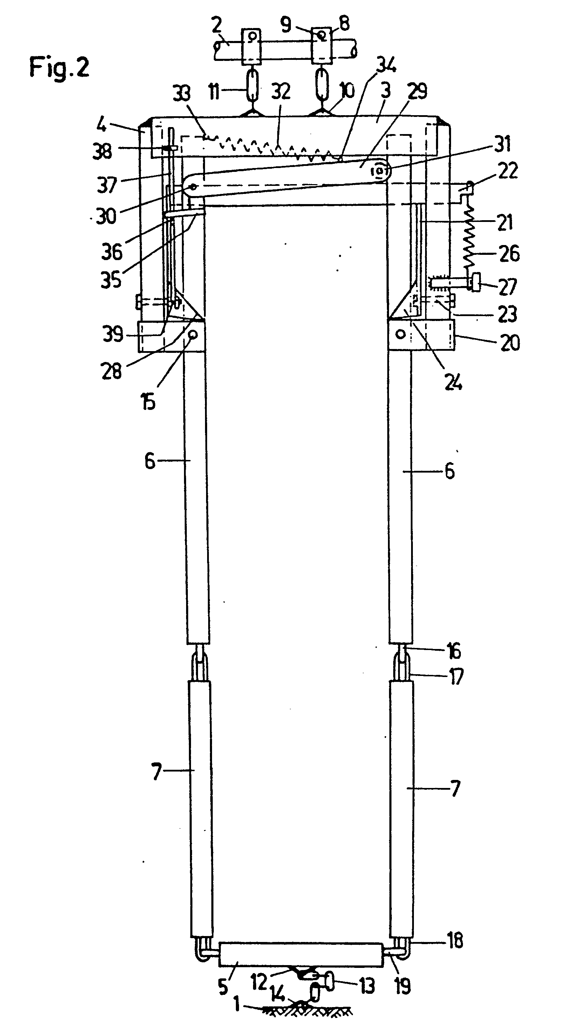

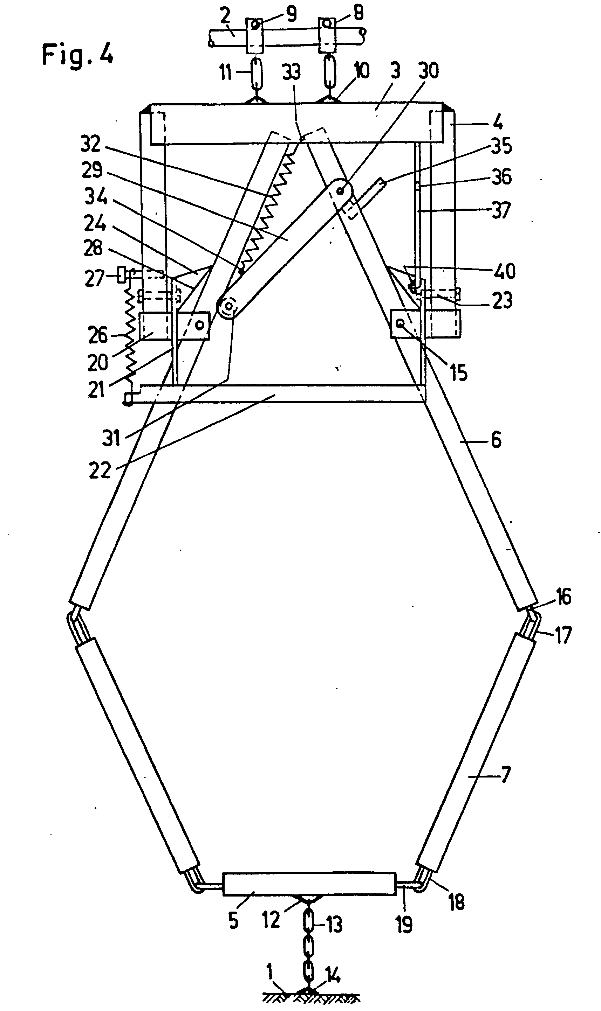

Le dispositif est donc monté entre la poutre supérieure 2 et le plancher 1 par l'intermédiaire des chaînes 11 et 13. Lorsque le dispositif prend la position fermée illustrée aux figures 1 à 3, la chaîne 13 pend librement, ce qui rend possible dans des limites déterminées les mouvements de l'animal. Lorsqu'au contraire le dispositif prend la position ouverte illustrée aux figures 4 à 6, la chaîne est moins lâche ou est tendue.

A chaque bras 4 de l'élément de suspension 3-4 est soudé un étrier de fixation 20. Ces étriers 20 sont dirigés l'un vers l'autre par leur côté ouvert et ils portent sur leurs côtés se faisant face un goupille 15. Les parois des étriers de fixation 20 sont verticales et parallèles à la poutre supérieure 2. Les goupilles 15 sont perpendiculaires à ces parois. Autour de chaque goupille 15 s'articule une partie supérieure 6 d'une branche de carcan. Les parties supérieures 6 se prolongent au-dessus des goupilles 15 sur une longueur qui est un peu inférieure à celle d'un bras 4; les extrémités supérieures des parties supérieures 6 se situent donc dans le canal 3 où elles peuvent se déplacer en va-et-vient lorque les parties supérieures 6 pivotent autour des goupilles 15.

Lorsque les parties supérieures 6 pendent librement à partir des goupilles 15, elles sont parallèles entre elles. Elles prennent cette position lorsque le carcan se trouve en position de fermeture; les parties supérieures 6 sont alors bloquées mutuellement, comme il ressort de la description ci-après.

Les directions indiquées ci-après pour les divers oeillets qui relient entre elles les parties du carcan se réfèrent à la position de ces parties lorsque l'élément de suspension 3-4, les branches de carcan 6-7 et la pièce inférieure 5 se trouvent dans le même plan, c'est-à-dire le plan de carcan, et que les parties supérieures 6 tout comme les parties inférieures 7 sont parallèles entre elles.

Les parties supérieures 6 et inférieures 7 sont des tubes ronds. A leurs extrémités inférieures, les parties supérieures 6 portent des oeillets 16 qui sont perpendiculaires au plan de carcan.

Les parties inférieures 7 portent à leurs extrémités supérieures des oeillets 17 qui sont parallèles au plan de carcan et qui s'engagent dans les oeillets 16 des parties supérieures 6.

A leurs extrémités inférieures, les parties inférieures 7 portent des oeillets 18 qui sont également parallèles au plan de carcan. Ces oeillets 18 s'engagent dans des oeillets 19 qui sont agencés aux extrémités de la pièce de liaison 5. Les oeillets 19 sont horizontaux et perpendiculaires au plan de carcan.

Les oeillets 16, 17 et 18, 19 précités forment des articulations qui permettent un déplacement mutuel des parties reliées, aussi bien dans le plan du carcan qu'en dehors de celui-ci. Les deux branches de carcan 6-7 peuvent donc prendre la position ouverte du carcan suivant les figures 4 à 6 et celle de fermeture de carcan suivant les figures 1 à 3. Dans la position fermée illustrée aux figures 1 à 3 du carcan, la chaîne 13 pend librement et les branches de carcan 6-7 peuvent fléchir à hauteur des articulations 16-17, aussi bien vers l'avant que vers l'arrière. Ceci n'est pas empêché: ni au-dessus où l'élément de suspension 3-4 qui est accroché aux chaînes 11 peut basculer, ni en dessous où la chaîne 13 et les articulations 18-19 permettent ce mouvement. Les articulations 16-17 permettent aussi une légère rotation autour de l'axe des parties inférieures 7 par rapport aux parties supérieures 6. Il en résulte qu'un bovin qui est attaché par le carcan en position fermée jouit cependant encore d'une relativement grande liberté de mouvement.

L'ouverture et la fermeture du carcan 5-6-7 décrit ci-avant sont commandées par un carcan ou étrier de commande 21-22 qui est actionné soit par un bovin, soit par un opérateur.

Cet étrier de commande 21-22 est constitué par deux branches parallèles et de forme symétrique 21 et un tube de liaison 22 qui relie entre elles les extrémités des deux branches 21.

Les autres extrémités des branches 21 sont reliées de façon articulée au moyen de goupilles 23 immédiatement au-dessus des étriers de fixation 20, aux bras 4 de l'élément de suspension 3-4. Les goupilles 23 forment des axes d'articulation qui s'étendent parallèlement à la base 3 dans le plan de carcan. Les branches 21 se trouvent sur les côtés internes des bras 4, entre un bras 4 et l'extrémité supérieure de la partie supérieure 6 articulée sur ce bras. Les deux branches 21 sont dotées à une certaine distance des goupilles 23, de bossages 24 se faisant face. Ces bossages 24 coopèrent avec les deux parties supérieures 6 et entrent en contact lors d'un basculement de l'étrier de commande 21-22, avec les extrémités supérieures des parties supérieures 6.

Chaque branche 21 est constituée par deux pièces plates qui s'étendent dans un plan perpendiculaire à la goupille 23 et dont les directions longitudinales forment un angle. A l'endroit de l'angle, le bossage triangulaire 24 se situe en oblique par rapport au plan des pièces plates 21. Les bossages 24 s'étendent en oblique par rapport au plan de symétrie longitudinale de la station couchée avec des nervures 28 convergeant à partir du tube de liaison 22, vers les extrémités supérieures des parties supérieures correspondantes 6. L'étrier de commande 21-22 s'étend essentiellement sur le côté frontal du carcan 5-6-7, c'est-à-dire sur le côté dirigé vers la mangeoire du carcan.

L'étrier de commande 21-22 pivote autour des goupilles 23 entre une position active et une position de repos.

La position de repos de l'étrier de commande 21-22 correspond à la position de fermeture du carcan 5-6-7, donc la position représentée aux figures 1 à 3.

Dans cette position de repos, l'étrier de commande 21-22 est dirigé avec ses branches 21 en oblique vers le haut. Le tube de liaison 22 se trouve alors sur le côté frontal du dispositif, contre l'une des lattes 29 décrites ci-après, qui s'articulent sur une partie supérieure 6, tandis que les bossages 24 sont situés complétement derrière les parties supérieures 6 en les laissant complètement libres. Ces parties supérieures 6 et donc les branches de carcan 6-7 pendent alors automatiquement sous l'effet de la pesanteur en position verticale, de telle sorte que le carcan 5-6-7 se trouve donc en position fermée. Comme décrit plus en détail ci-après, les parties supérieures 6 sont verrouillées dans cette position.

En faisant pivoter l'étrier de commande 21-22, vers le bas à partir de la position précitée suivant les figures 1 à 3, vers la position suivant les figures 4 à 6, les bossages 24 entrent en contact par leurs nervures 28 convergent l'une vers l'autre, avec les extrémités supérieures des parties supérieures 6. Lorsque l'étrier de commande 21-22 vient avec son tube de liaison 22 plus bas, les bossages 24 entrent en contact avec les parties supérieures 6 et les points de contact entre les bossages 24 et les parties supérieures 6 se rapprochent, de telle sorte que les portions situées au-dessus des goupilles 15 des parties supérieures 6 sont repoussées l'une vers l'autre. De ce fait, les parties supérieures 6 s'écartent en dessous des goupilles 15 et le carcan 5-6-7 passe à son état d'ouverture.

Lorsque l'étrier de commande 21-22 a atteint sa position active illustrée aux figures 4 à 6, le carcan 5-6-7 se trouve complètement en position ouverte et l'étrier de commande 21-22 est dirigé en oblique vers le bas. L'étrier de commande 21-22 ferme alors partiellement l'ouverture du carcan 5-6-7.

Un ressort en spirale 26 est fixé par une extrémité à une goupille 27 qui est soudée un peu au-dessus du pivot 23 sur un bras 4. L'autre extrémité du ressort 26 est fixé à une extrémité du tube de liaison 22 qui s'étend sur un côté en dehors du carcan 5-6-7, de l'élément de suspension 3-4 et du reste de l'étrier de commande 21-22. En chaque position de l'étrier de commande 21-22, le ressort 26 est sollicité en traction.

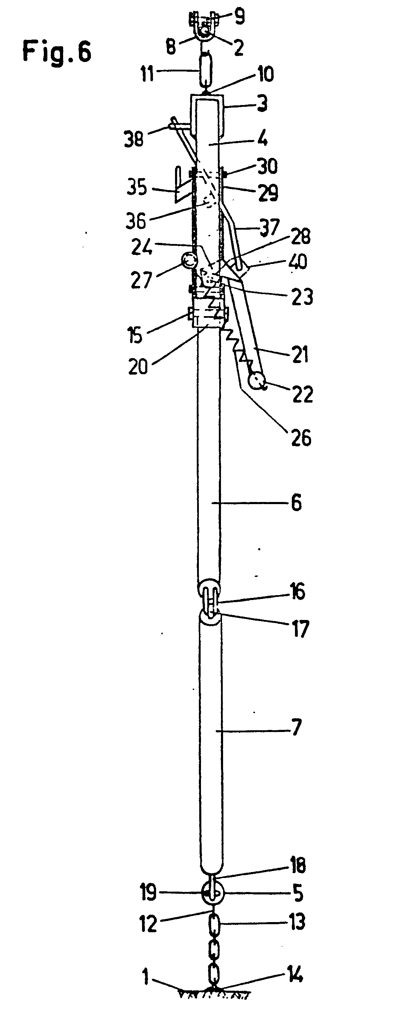

En position active de l'étrier de commande 21-22, donc en position ouverte du carcan 5-6-7, l'axe géométrique longitudinal du ressort 26 passe en dessous du pivot 23, comme il ressort principalement de la figure 6. Dans cette position, le ressort 26 maintient l'étrier de commande 21-22 en position active et par conséquent aussi le carcan 5-6-7 en position ouverte.

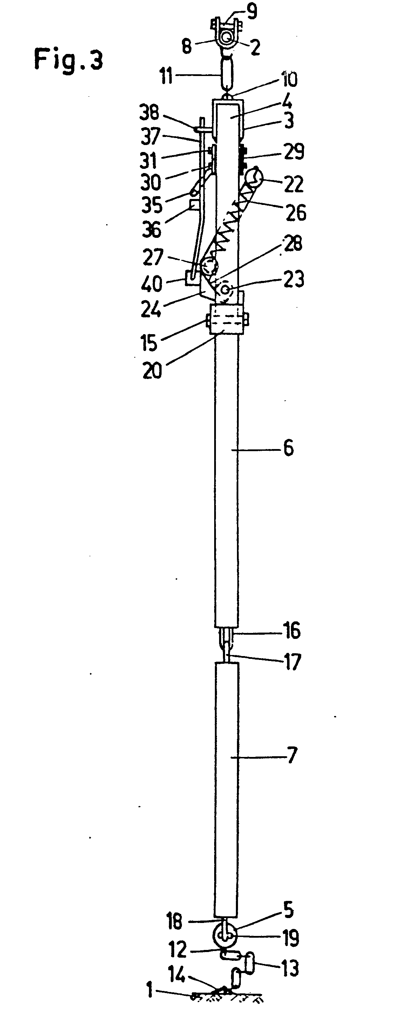

En position de repos de l'étrier de commande 21-22, donc en position fermée du carcan 5-6-7, l'axe géométrique longitudinal du ressort 26 passe au-dessus du pivot 23, comme il ressort en particulier de la figure 3. Dans cette position, le ressort 26 maintient l'étrier de commande 21-22 en position de repos et par conséquent aussi le carcan 5-6-7 en position fermée.

Lorsque l'étrier de commande 21-22 passe de la position active à la position de repos ou inversément de la position de repos à la position active, l'axe géométrique longitudinal du ressort 26 passe par la goupille 23. Dans cette position intermédiaire, dite point mort, le ressort 26 ne tire l'étrier de commande ni vers la position active, ni vers celle de repos. Dès que l'axe géométrique longitudinal du ressort 26 parvient en dessous ou respectivement au-dessus de la goupille 23, ce ressort 26 tire l'étrier de commande vers la position active ou respectivement la position de repos, ce qui amène le carcan 5-6-7 vers la position ouverte ou respectivement la position fermée.

Le dispositif comporte deux lattes 29 qui s'articulent devant et derrière l'extrémité supérieure d'une partie supérieure 6 autour d'une goupille 30 perpendiculaire au plan du carcan. Entre leurs extrémités opposées à la goupille 30, les lattes portent une roulette 31 qui circule sur l'autre partie supérieure 6.

Un ressort de traction 32 est relié d'une part à un oeillet 33 sur l'extrémité supérieure de la partie supérieure 6 dans laquelle est montée la goupille 30 et, d'autre part, à un goujon 34. Ce dernier est monté au voisinage de la roulette 31 entre les lattes 29. Au voisinage de la goupille 30, la latte 29 qui se situe sur le côté arrière porte une saillie 35 qui, dans la position de repos de l'étrier de commande 21-22, rencontre un butoir 36 qui est solidaire d'une tige 37.

La tige 37 est guidée avec un certain jeu dans un oeillet 38 qui est situé sur la face dorsale de la base 3 de l'élément de suspension. La tige 37 possède une extrémité coudée 39 qui s'engage dans une ouverture pratiqué dans ce but dans une partie en saillie 40 d'une branche 21 de l'étrier de commande 21-22. L'extrémité coudé 39 de la tige 37 est horizontale et parallèle au plan de carcan, de telle sorte que la tige 37 pivote donc dans un plan vertical perpendiculaire au plan de carcan.

En position de fermeture du carcan 5-6-7, donc en position de repos de l'étrier de commande 21-22, l'ouverture du carcan est empêchée, même si l'animal devait essayer d'écarter les parties supérieures 6 en dessous des goupilles 15. Les lattes 29 exercent en effet une pression avec la roulette 31 sur une partie supérieure 6 et sont reliées par la goupille 30 à l'autre partie supérieure 6.

Les extrémités des lattes 29 entre lesquelles est montée la roulette 31 sont alors situées plus haut que la goupille 30, mais ne peuvent parvenir plus haut car ces extrémités rencontrent les bords inférieurs de la base 3. Un mouvement d'ouverture des parties supérieures 6 sous les goupilles 15 rapproche nécessairement les portions des parties supérieures 6 au-dessus des goupilles 15 l'une de l'autre, ce qui est rendu impossible car ceci s'accompagnerait nécessairement d'un mouvement vers le haut des lattes 29 à hauteur de la roulette 31, ce qui est empêché parce que les lattes 29 rencontrent le bord inférieur de la base 3.

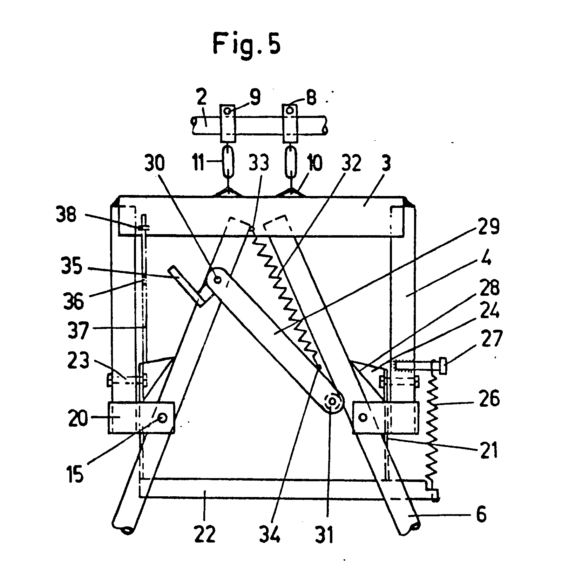

Lorsqu'on tire cependent vers le bas l'étrier de commande 21-22 avec son tube de liaison 22, lors du mouvement de pivotement de l'étrier de commande, la partie en saillie 40 remonte d'abord, ce qui amène aussi la tige 37 avec le butoir 36 vers le haut et donc repousse la saillie 35 vers le haut. De ce fait, un mouvement de pivotement est appliqué aux lattes 29 autour de la goupille 30, de telle sorte que la roulette 31 parvient plus bas que la goupille 30 et un mouvement supplémentaire d'ouverture des parties supérieures 6 sous les goupilles 15 et donc un mouvement de rapprochement mutuel des portions des parties supérieures 6 au-dessus des goupilles deviennent possibles, parce que lors de ce mouvement supplémentaire, les lattes 29 pivotent autour de la goupille 30 vers la position représentée aux figures 4 et 5.

La roulette 31 roule alors sur la partie supérieure 6. Le mouvement de descente des lattes 29 jusqu'à ce qu'elles aient atteint leur position horizontale, amène d'abord les portions des parties supérieures 6 au-dessus des goupilles 15 un peu plus loin l'une de l'autre, mais ceci est possible parce que les parties supérieures 6 en position de fermeture pendent verticalement et ne rencontrent pas les faces internes des bras 4 de l'élément de suspension 3-4, et qu'au début du mouvement de pivotement vers le bas de l'étrier de commande 21-22, les bossages 24 n'agissent pas encore sur les parties supérieures 6. Le déverrouillage précède donc l'ouverture du carcan 5-6-7.

Lors du mouvement vers le haut de l'étrier de commande 21-22 de la position ouverte illustrée aux figures 4 à 6 du carcan 5-6-7 vers la position fermée illustrée aux figures 1 à 3, les lattes 29 sont tirées à leurs position de verrouillage par le ressort 32 et la tige 37 est amenée à la position correspondante par la saillie 40 de l'étrier de commande 21-22.

Un animal pénètrant dans la station couché-et-debout trouve le carcan 5-6-7 à la position ouverte des figures 4 à 6. Il passe la tête dans l'ouverture qui est libre entre les branches de carcan 6-7 pour manger dans la mangeoire. Il exerce alors une poussée avec le cou sur le tube de liaison 22 de l'étrier de commande 21-22 qui est déplacé vers le haut avec un mouvement de pivotement. Le ressort 26 parvient alors très rapidement au-delà de son point mort précité, ce qui provoque la poursuite du déplacement vers le haut de l'étrier de commande 21-22, la poursuite de la fermeture du carcan 5-6-7 et le verrouillage avec les lattes 29 dans leur position la plus haute.

Etant donné que le ressort 26 est encore sollicité en traction dans la position de repos de l'étrier de commande 21-22, ce ressort 26 maintient l'étrier de commande 21-22 dans cette position de repos. Par une action humaine, l'étrier de commande 21-22 peut être ramené par basculement, tout d'abord à l'encontre de l'action du ressort 26, à sa position active.

Pour ouvrir le carcan 5-6-7, il suffit de tirer manuellement l'étrier de commande vers le bas, ce qui provoque d'abord avec le butoir 36, le déverrouillage et ensuite avec les bossages 24, l'ouverture du carcan 5-6-7.

La construction du dispositif est très simple. On ne perd que peu d'espace de l'ouverture du carcan 5-6-7, du moins en position fermée, à cause des moyens de commande et de verrouillage, et la hauteur totale du dispositif est relativement faible. Le fonctionnement est très fiable.

L'invention n'est en aucune façon limitée à la forme de réalisation décrite ci-avant.

Bien que la suspension du dispositif soit décrite avec l'étrier de commande à l'avant, c'est-à-dire du côté de la mangeoire, le dispositif peut aussi être suspendu avec l'étrier de commande à l'arrière. Etant donné que pour passer de la position ouverte à la position fermée, l'étrier de commande doit finalement être relevé, le dispositif peut aussi fonctionner lorsqu'il est suspendu avec l'étrier de commande vers l'arrière.

La pièce inférieure peut être limitée à une articulation entre les deux parties inférieures des branches de carcan.

Divers éléments peuvent être ajustables dans le sens transversal du carcan afin de pouvoir utiliser ce dernier avec des animaux qui ont une largeur différente. Ainsi par exemple, la base de l'élément de suspension peut être constituée par deux parties qui peuvent être fixées l'une à l'autre de diverses façons, ce qui rend ajustable l'écartement des bras de l'élément de suspension. Le tube de liaison aussi de l'étrier de commande peut être en deux parties, avec une possibilité de diverses fixations mutuelles des deux parties. Les parties supérieures des branches de carcan peuvent également être constituées au sommet par différentes parties qui sont fixées de diverses façons, de telle sorte que l'écartement entre les branches de carcan en position de fermeture soit modifié. De même la pièce inférieure du carcan peut être en deux parties.

## Revendications

1. Dispositif pour attacher automatiquement un animal entrant dans une stalle, ce dispositif étant du type comprenant un organe de commande de la fermeture située sur le passage de l'animal de manière à être repoussé par celui-ci, ce dispositif comprenant en outre:
— un élément de suspension (3-4) destiné à être suspendu par son sommet à une structure fixe (1-2),
— une pièce inférieure (5) qui est reliée à la structure fixe (1-2),
— deux branches latérales (6-7) qui se situent entre l'élément de suspension (3-4) et la pièce inférieure (5) et qui, conjointement avec la pièce inférieure (5), forment un carcan (5-6-7) lesdites branches comportant chacune:
— une partie supérieure (6) qui est articulée sur l'élément de suspension (3-4), autour d'un axe (15) qui est perpendiculaire au plan du carcan,
et
— une partie inférieure (7) qui est reliée, par l'intermédiaire d'une première articulation (16-17), à ladite partie supérieure (6) de la branche et, par l'intermédiaire d'une seconde articulation (18-19), à ladite pièce inférieure (5) reliée à la structure fixe, ces articulations (16-17 et 18-19) permettant un mouvement aussi bien dans le plan du carcan qu'en dehors de celui-ci,
— des moyens de verrouillage (29) qui dans une position de fermeture, empêchent les parties basses des parties supérieures (6) de pivoter vers l'extérieur dans le plan de carcan,

— un organe de commande (21-22) en forme d'étrier qui peut pivoter entre une première position dans laquelle il maintient écartées les parties basses desdites parties supérieures (6) des branches et barre le passage entre ces parties supérieures, et une seconde position dans laquelle il laisse les parties supérieures (6) prendre une position verticale rapprochée de fermeture

et

— une liaison mécanique (32-35-36-37-40) entre l'organe de commande (21-22) et les moyens de verrouillage (29) qui, dans la première position de l'organe de commande (21-22), maintient les moyens de verrouillage (29) en position de déverrouillage et, dans le seconde position de l'organe de commande (21-22), maintient les moyens de verrouillage (29) en position de verrouillage,

caractérisé en ce que

— l'élément de suspension (3-4) est en forme de U inversé et comprend une base (3) horizontale et deux bras s'étendant vers le bas (4),

— les parties supérieures (6) des branches (6-7) du carcan (5-6-7) s'articulent sur l'élément de suspension autiur de goupilles (15) qui sont supportées au voisinage des extrémités inférieures des bras (4) de l'élément de suspension (3-4), et

— les parties supérieures (6) des branches se prolongent au-dessus de ces goupilles (15) de manière à former des leviers du premier genre et en ce que

— l'organe de commande (21-22) et les moyens de verrouillage (29) agissent sur les prolongements des parties supérieures (6) des branches dépassant au-dessus des goupilles (15).

2. Dispositif suivant la revendication 1, caractérisé en ce que lesdites goupilles (15) se situent sur le côté interne des bras (4) de l'élément de suspension.

3. Dispositif suivant l'une ou l'autre des revendications 1 et 2, caractérisé en ce que les parties supérieures (6) des branches se prolongent au-dessus desdites goupilles (15) jusque contre la base (3) de l'élément de suspension.

4. Dispositif suivant la revendication 3, caractérisé en ce que la base (3) de l'élément de suspension (3-4) forme un canal dans lequel peuvent se déplacer les extrémités supérieures des parties supérieures (6) des branches (6-7).

5. Dispositif suivant l'une quelconque des revendications 1-4, caractérisé en ce que l'organe de commande (21-22) s'articule par rapport à l'élément de suspension (3-4) autour d'un axe (23) parallèle au plan de carcan, entre une première position inférieure et une seconde position supérieure.

6. Dispositif suivant la revendication 5, caractérisé en ce que l'organe de commande (21-22) s'articule par rapport à l'élément de suspension autour d'un axe (23) qui se situe à hauteur des extrémités inférieures des bras (4) de cet élément de suspension.

7. Dispositif suivant la revendication 6, caractérisé en ce que l'organe de commande (21-22) dans la première position est dirigé en oblique vers le bas, en s'écartant de l'élément de suspension (3-4).

8. Dispositif suivant l'une quelconque des revendications 5 à 7, caractérisé en ce que l'organe de commande (21-22) porte deux bossages (24) qui engagent les prolongements des parties supérieures (6) au-dessus des goupilles (15) et en commandent le mouvement.

9. Dispositif suivant la revendication 8, caractérisé en ce que les bossages de l'organe der commande (21-22) sont agencés sur les branches (21) de l'étrier constitué par l'organe de commande.

10. Dispositif suivant la revendication 9, caractérisé en ce que les branches (21) de l'organe de commande (21-22) comportent deux parties faisant un angle entre elles, tandis que les bossages (24) se situent au voisinage de la jonction des deux parties des branches (21) et font saillie sur les côtés faisant face aux extrémités supérieures des parties supérieures (6).

11. Dispositif suivant l'une ou l'autre des revendications 9 et 10, caractérisé en ce que les bossages (24) ont une forme approximativement triangulaire.

12. Dispositif suivant l'une quelconque des revendications 5 à 11, caractérisé en ce que l'organe de commande (21-22) est relié à un ressort (26) qui est relié à l'élément de suspension (3-4), qui passe par un point mort lorsque l'organe de commande (21-22) passe de la position inférieure à la position supérieure, et qui tire, d'un côté du point mort, l'organe de commande (21-22) vers la position supérieure et, de l'autre côté du point mort, vers la position inférieure.

13. Dispositif suivant la revendication 12, caractérisé en ce que l'axe géometrique du ressort (26) dans la position supérieure de l'organe de commande (21-22) passe au-dessus de l'axe d'articulation (23) de l'organe de commande (21-22) par rapport à l'élément de suspension (3-4), et dans la position inférieure de cet organe de commande (21-22) en dessous de cet axe d'articulation (23).

14. Dispositif suivant l'une quelconque des revendications 5 à 13, caractérisé en ce que les moyens de verrouillage comprennent une latte (29) qui s'articule avec une extrémité par rapport à une partie supérieure (6) et, en position de fermeture du carcan (5-6-7), engage l'autre partie supérieure (6) en un point situé plus haut que l'axe d'articulation (30) de la latte (29) sur la première partie supérieure précitée (6), tandis que la liaison mécanique (32-35-36-37-40) entre l'organe de commande (21-22) et les moyens de verrouillage (29) fait pivoter vers le bas la latte autour de son axe d'articulation par rapport à la partie supérieure (6), lors du mouvement vers le bas de l'organe de commande (21-22).

15. Dispositif suivant la revendication 14, caractérisé en ce que la latte (29) est dotée d'une saillie (35) qui engage en position de fermeture du carcan, un butoir (36) faisant partie d'une petite tige (37) qui est repoussée vers le haut au début du déplacement vers le bas de l'organe de commande (21-22).

**Patentansprüche**

1. Vorrichtung zum automatischen Fesseln eines in eine Box hineintretenden Tieres der aus einem derart im Durchgang für das Tier angeordneten Verschlussbetätigungsmittel bestehenden Art, dass dieses Betätigungsmittel vom Tier zurückgestossen wird, und ausserdem bestehend aus

— einem mit seinem Scheitel an einer Feststruktur (1-2) aufzuhängenden Aufhängemittel (3-4);

— einem mit der vorgenannten Feststruktur (1-2) verbundenen Unterteil (5);

— zwei zwischen dem Aufhängemittel (3-4) und dem Unterteil (5) befindlichen, zusammen mit diesem Unterteil (5) einen Halsbügel (5-6-7) bildenden Seitenschenkeln (6-7), wobei diese Schenkel je aus

— einem am Aufhängemittel (3-4) um eine senkrecht zur Ebene dieses Halsbügels stehende Achse (15) angelenkten Oberteil (6) und

— einem mittels eines ersten Gelenkes (16-17) am vorgenannten Oberteil (6) des Schenkels und mittels eines zweiten Gelenkes (18-19) am mit der Feststruktur verbundenen Unterteil (5) angelenkten unteren Teil (7), wobei die Gelenke (16-17 und 18-19) eine Bewegung innerhalb und ausserhalb der Ebene des Halsbügels ermöglichen, bestehen;

— Verriegelungsmitteln (29), welche in einer Schliesslage das Herausschwenken der unteren Teile der Oberteile (6) nach aussen in der Ebene des Halsbügels verhindern;

— einem bügelförmigen Betätigungsmittel (21-22), das derart schwenkbar angeordnet ist, dass es in einer ersten Lage die unteren Teile der vorgenannten Oberteile (6) der Schenkel voneinander entfernt hält und den Durchgang zwischen diesen Oberteilen (6) sperrt und in einer zweiten Lage den Übergang der Oberteile (6) in eine naheliegende senkrechte Schliesslage ermöglicht;
und

— einer mechanischen Kupplung (32-35-36-37-40) zwischen dem Betätigungsmittel (21-22) und den Verriegelungsmitteln (29), welche in der ersten Lage des Betätigungsmittels (21-22) die Verriegelungsmittel (29) in ihrer Entriegelungslage und in der zweiten Lage des Betätigungsmittels (21-22) die Verriegelungsmittel (29) in ihrer Verriegelungslage hält;
dadurch gekennzeichnet, dass

— das Aufhängemittel (3-4) ein umgekehrt U-förmig profilierter Teil mit einer waagerechten Basis (3) und zwei nach unten gerichteten Schenkeln (4) ist;

— die Oberteile (6) der beiden Schenkel (6-7) des Halsbügels (5-6-7) am Aufhängemittel mittels in der Nähe der unteren Enden der Schenkel (4) des Aufhängemittels (3-4) angeordneter Stifte (15) angelenkt sind;

— die Oberteile (6) der Schenkel derart oberhalb der vorgenannten Stifte (15) verlängert sind, dass sie Hebel der ersten Art bilden;
und dass

— das Betätigungsmittel (21-22) und die Verriegelungsmittel (29) auf die Verlängerungen der sich oberhalb der Stifte (15) erstreckenden Oberteile (6) der Schenkel einwirken.

2. Vorrichtung gemäss dem Anspruch 1, dadurch gekennzeichnet, dass die vorgenannten Stifte (15) sich an der Innenseite der Schenkel (4) des Aufhängemittels befinden.

3. Vorrichtung gemäss irgendeinem der vorhergehenden Ansprüche 1 und 2, dadurch gekennzeichnet, dass die Oberteile der Schenkel (6) oberhalb der vorgenannten Stifte (15) bis zur Basis (3) des Aufhängemittels verlängert sind.

4. Vorrichtung gemäss dem Anspruch 3, dadurch gekennzeichnet, dass die Basis (3) des Aufhängemittels (3-4) eine Rille bildet, in der die Oberteile (6) der Schenkel (6-7) sich verschieben können.

5. Vorrichtung gemäss irgendeinem der vorhergehenden Ansprüche 1-4, dadurch gekennzeichnet, dass das Betätigungsmittel (21-22) gelenkig in bezug auf das Aufhängemittel (3-4) um eine mit der Ebene des Halsbügels gleichlaufende Achse zwischen einer ersten unteren und einer zweiten oberen Lage angeordnet ist.

6. Vorrichtung gemäss dem Anspruch 5, dadurch gekennzeichnet, dass das Betätigungsmittel (21-22) gelenkig in bezug auf das Aufhängemittel um eine im Bereich der unteren Enden der Schenkel (4) desselben befindliche Achse (23) angeordnet ist.

7. Vorrichtung gemäss dem Anspruch 6, dadurch gekennzeichnet, dass das Betätigungsmittel (21-22) in seiner ersten Lage derart schräg nach unten gerichtet ist, dass es sich vom Aufhängemittel (3-4) entfernt.

8. Vorrichtung gemäss irgendeinem der vorhergehenden Ansprüche 5-7, dadurch gekennzeichnet, dass das Betätigungsmittel (21-22) mit zwei mit den sich oberhalb der Stifte (15) erstreckenden Verlängerungen der Oberteile (6) zusammenwirkenden und deren Bewegung steuernden Höckern (24) versehen ist.

9. Vorrichtung gemäss dem Anspruch 8, dadurch gekennzeichnet, dass die vorgenannten Höcker des Betätigungsmittels (21-22) auf den Schenkeln (21) des durch das Betätigungsmittel gebildeten Bügels angeordnet sind.

10. Vorrichtung gemäss dem Anspruch 9, dadurch gekennzeichnet, dass die Schenkel (21) des Betätigungsmittels (21-22) mit zwei einen bestimmten Winkel einschliessenden Teilen versehen sind und die vorgenannten Höcker (24) in der Nähe des Verbindungspunktes zwischen diesen beiden Teilen des Schenkels (21) angeordnet sind und an den den oberen Enden der Oberteile (6) gegenüberstehenden Seiten herausragen.

11. Vorrichtung gemäss irgendeinem der Ansprüche 9 und 10, dadurch gekennzeichnet, dass die Höcker (24) nahezu dreieckig profiliert sind.

12. Vorrichtung gemäss irgendeinem der vorhergehenden Ansprüche 5-11, dadurch gekennzeichnet, dass das Betätigungsmittel (21-22) mit einer am Aufhängemittel (3-4) befestigten Feder (26) verbunden ist, wobei diese Feder durch einen Totpunkt geht, wenn das Betätigungsmittel (21-22) ab seiner unteren Lage in seine obere Lage übergeht, und das Betätigungsmittel (21-22) an der einen Seite des Totpunktes in seine obere Lage und an der anderen Seite des Totpunktes in seine untere Lage zieht.

13. Vorrichtung gemäss dem Anspruch 12, dadurch gekennzeichnet, dass die geometrische Achse der vorhergenannten Feder (26) in der oberen Lage des Betätigungsmittels (21-22) oberhalb der Gelenkachse (23) desselben in bezug auf das Aufhängemittel (3-4) und in der unteren Lage des Betätigungsmittels (21-22) unterhalb dieser Gelenkachse (23) liegt.

14. Vorrichtung gemäss irgendeinem der vorhergehenden Ansprüche 5-13, dadurch gekennzeichnet, dass die Verriegelungsmittel mit einer mit einem Ende an einem Oberteil (6) angelenkten Latte (29) versehen sind, welche in der Verschlusslage des Halsbügels (5-6-7) mit dem anderen Oberteil (6) in einem oberhalb der Gelenkachse (30) der Latte (29) auf dem erstgenannten Oberteil (6) befindlichen Punkt zusammenwirkt, während die mechanische Kupplung (32-35-36-37-40) zwischen dem Betätigungsmittel (21-22) und den Verriegelungsmitteln (29) die Latte (29) abwärts um ihre Gelenkachse in bezug auf den Oberteil (6) während der Abwärtsbewegung des Betätigungsmittels (21-22) in Schwenkung versetzt.

15. Vorrichtung gemäss dem Anspruch 14, dadurch gekennzeichnet, dass die vorgenannte Latte (29) einen Vorsprung (35) aufweist, der in der Verschlusslage des Halsbügels mit einem Anschlag (36) einer im Anfang der Abwärtsbewegung des Betätigungsmittels (21-22) nach oben zurückgestossenen kleinen Stange (37) zusammenwirkt.

## Claims

1. Device for automatically tying-up an animal entering a stall, said device being of that type comprising a closing-control member lying in the path of the animal to be pushed back thereby, said device further comprising:
— a suspension element (3-4) to be hung with the top thereof from a fixed structure (1-2),
— a bottom piece (5) which is connected to the fixed structure (1-2),
— two side legs (6-7) which lie between the suspension element (3-4) and the bottom piece (5) and which together with the bottom piece (5), form a yoke (5-6-7), said legs each comprising:
— a top part (6) which is hinged to the suspension element (3-4) about an axis (15) at right angle to the yoke plane,
and
— a bottom part (7) which is connected through a first hinge (16-17) to said top leg part (6), and through a second hinge (18-19) to said bottom piece (5) connected to the fixed structure, said hinges (16-17 and 18-19) allowing a movement as well in the yoke plane as outside said plane,
— locking means (29) which prevent in a closing position, the lower portions from the top parts (6) swinging outwards in the yoke plane,
— a strap-shaped control member (21-22) which is swingable between a first position wherein it retains the lower portions from said top leg parts (6) spread out and obstructs the passage between said top parts, and a second position wherein it lets the top parts (6) take a vertical close closing position,
and
— a mechanical connection (32-35-36-37-40) between the control member (21-22) and the locking means (29) which in the first position of the control member (21-22), retaing the locking means (29) in unlocked position, and in the second position of the control member (21-22), retains the locking means (29) in locked position,
in which
— the suspension element (3-4) is in the shape of a reversed U and comprises a horizontal base (3) and two arms (4) extending downwards,
— the top parts (6) of the legs (6-7) of the yoke (5-6-7) hinge on the suspension element about pins (15) which are supported adjacent the lower ends of the arms (4) of the suspension element (3-4), and
— the top leg parts (6) project above said pins (15) in such a way as to form first-class levers,
and in which
— the control member (21-22) and the locking means (29) act on the extensions of the top leg parts (6) which project above the pins (15).

2. Device as defined in claim 1, in which said pins (15) lie on the inner side from the suspension element arms (4).

3. Device as defined in either one of claims 1 and 2, in which the top leg parts (6) project above said pins (15) up to against the suspension element base (3).

4. Device as defined in claim 3, in which the base (3) of the suspension element (3-4) forms a channel wherein the uppermost ends of the top parts (6) of the legs (6-7), are movable.

5. Device as defined in any one of claims 1-4, in which the control member (21-22) hinges relative to the suspension element (3-4) about an axis (23) in parallel relationship with the yoke plane, between a first lower position and a second upper position.

6. Device as defined in claim 5, in which the control member (21-22) hinges relative to the suspension element about an axis (23) which lies level with the lower ends ot the arms (4) of said suspension element.

7. Device as defined in claim 6, in which the control member (21-22) in the first position, lies at an angle downwards, away from the suspension element (3-4).

8. Device as defined in any one of claims 5 to 7, in which the control member (21-22) bears two bosses (24) which engage the extensions of the top parts (6) above the pins (15) and control the movement thereof.

9. Device as defined in claim 8, in which the bosses of the control member (21-22) are arranged on the legs (21) of the strap comprised of the control member.

10. Device as defined in claim 9, in which the legs (21) of the control member (21-22) comprise two parts forming an angle with one another, while the bosses (24) lie adjacent the junction of both parts of the legs (21) and project on those sides facing the upper ends of said top parts (6).

11. Device as defined in either one of claims 9 and 10, in which the bosses (24) are of an approximately triangular shape.

12. Device as defined in any one of claims 5 to 11, in which the control member (21-22) is connected to a spring (26) which is connected to the suspension element (3-4), which goes through a dead position when the control member (21-22) moves from the lower position to the upper position, and which on the one side of the dead position, pulls the control member (21-22) to the upper position, and on the other side of the dead position, pulls same to the lower position.

13. Device as defined in claim 12, in which the geometrical axis of the spring (26) in the upper position of the control member (21-22), passes above the hinges axis (23) of the control member (21-22) relative to the suspension element (3-4), and in the lower position of said control member (21-22), passes below said hinge axis (23).

14. Device as defined in any one of claims 5 to 13, in which the locking means comprise a lath (29) which hinges with one end thereof relative to the one top part (6), and in the closed position of the yoke (5-6-7), engages the other top part (6) in a point lying higher than the hinge axis (30) of the lath (29) on said first top part (6), while the mechanical connection (32-35-36-37-40) between the control member (21-22) and the locking means (29) causes the lath to swing downwards about the hinge axis thereof relative to the top part (6), during the downwards movement of the control member (21-22).

15. Device as defined in claim 14, in which the lath (29) is provided with a projection (35) which engages in the yoke closed position, a buffer (36) which is part of a small rod (37) which is pushed upwards at the beginning of the downwards movement of the control member (21-22).

Fig. 1

0 097 406

Fig.2

Fig.3

15

Fig. 4

# Fig. 5

Fig.6

0 097 406

## Fig. 7

28
24
21
40
21
22

## Fig. 8

40
21
28
21
22